# EUROPEAN PATENT SPECIFICATION

(11) **EP 2 467 890 B1**
(45) Date of publication and mention of the grant of the patent: **19.06.2019**
(21) Application number: 10747940.4
(22) Date of filing: 18.08.2010
(51) Int. Cl.: H01M 4/90, H01M 4/92, H01M 4/86, C25B 9/10, C25B 11/04, H01M 8/04223

(54) **CATALYST LAYER**
KATALYSATORSCHICHT
COUCHE DE CATALYSEUR

(30) Priority: 20.08.2009 GB 0914562
(43) Date of publication of application: 27.06.2012
(60) Divisional application: 19173665.1
(73) Proprietor: Johnson Matthey Fuel Cells Limited, London EC4A 4AB (GB)
(72) Inventor: SHARMAN, Jonathan, David, Brereton, Berkshire RG4 9JR (GB); THEOBALD, Brian, Ronald, Berkshire RG4 9LQ (GB); THOMPSETT, David, Berkshire RG4 7BQ (GB); WRIGHT, Edward, Anthony, Berkshire RG1 7AA (GB)
(74) Representative: Scott, Philip McDermott
(86) International application number: PCT/GB2010/051361
(87) International publication number: WO 2011/021034

(56) References cited:
- WO-A1-01/11704
- WO-A1-2005/049199
- WO-A1-2007/119130
- WO-A2-01/15247
- WO-A2-03/032418
- WO-A2-2005/014884
- ZHIGANG S ET AL: "Bifunctional electrodes with a thin catalyst layer for 'unitized' proton exchange membrane regenerative fuel cell", JOURNAL OF POWER SOURCES, ELSEVIER SA, CH, vol. 79, no. 1, 1 May 1999 (1999-05-01), pages 82-85, XP004164167, ISSN: 0378-7753, DOI: DOI:10.1016/S0378-7753(99)00047-6
- MA L ET AL: "Investigations on high performance proton exchange membrane water electrolyzer", INTERNATIONAL JOURNAL OF HYDROGEN ENERGY, ELSEVIER SCIENCE PUBLISHERS B.V., BARKING, GB, vol. 34, no. 2, 1 January 2009 (2009-01-01), pages 678-684, XP025893317, ISSN: 0360-3199, DOI: DOI:10.1016/J.IJHYDENE.2008.11.022 [retrieved on 2008-12-16]
- MARSHALL A ET AL: "Electrochemical characterisation of IrxSn1-xO2 powders as oxygen evolution electrocatalysts", ELECTROCHIMICA ACTA, ELSEVIER SCIENCE PUBLISHERS, BARKING, GB, vol. 51, no. 15, 1 April 2006 (2006-04-01) , pages 3161-3167, XP025167967, ISSN: 0013-4686, DOI: DOI:10.1016/J.ELECTACTA.2005.09.004 [retrieved on 2006-04-01]
- DI BLASI A ET AL: "Preparation and evaluation of RuO2â IrO2, IrO2â Pt and IrO2â Ta2O5 catalysts for the oxygen evolution reaction in an SPE electrolyzer", JOURNAL OF APPLIED ELECTROCHEMISTRY, KLUWER ACADEMIC PUBLISHERS, DO, vol. 39, no. 2, 6 September 2008 (2008-09-06), pages 191-196, XP019677886, ISSN: 1572-8838
- MARSHALL ET AL: "Performance of a PEM water electrolysis cell using IrxRuyTazO2 electrocatalysts for the oxygen evolution electrode", INTERNATIONAL JOURNAL OF HYDROGEN ENERGY, ELSEVIER SCIENCE PUBLISHERS B.V., BARKING, GB, vol. 32, no. 13, 28 August 2007 (2007-08-28), pages 2320-2324, XP022216618, ISSN: 0360-3199, DOI: DOI:10.1016/J.IJHYDENE.2007.02.013

## Description

The present invention relates to a catalyst layer, particularly a catalyst layer for use in a fuel cell that experiences high electrochemical potentials.

A fuel cell is an electrochemical cell comprising two electrodes separated by an electrolyte. A fuel, such as hydrogen or an alcohol such as methanol or ethanol, is supplied to the anode and an oxidant, such as oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

In proton exchange membrane (PEM) fuel cells, the electrolyte is a solid polymeric membrane. The membrane is electronically insulating but proton conducting, and protons, produced at the anode, are transported across the membrane to the cathode, where they combine with oxygen to form water.

The principle component of a PEM fuel cell is known as a membrane electrode assembly (MEA) and is essentially composed of five layers. The central layer is the polymer ion-conducting membrane. On either side of the ion-conducting membrane there is an electrocatalyst layer, containing an electrocatalyst designed for the specific electrochemical reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore the gas diffusion layer must be porous and electrically conducting.

Electrocatalysts for fuel oxidation and oxygen reduction are typically based on platinum or platinum alloyed with one or more other metals. The platinum or platinum alloy catalyst can be in the form of unsupported nanometre sized particles (such as metal blacks or other unsupported particulate metal powders) or can be deposited as even higher surface area particles onto a conductive carbon substrate, or other conductive material (a supported catalyst).

The MEA can be constructed by several methods. The electrocatalyst layer may be applied to the gas diffusion layer to form a gas diffusion electrode. Two gas diffusion electrodes can be placed either side of an ion-conducting membrane and laminated together to form the five-layer MEA. Alternatively, the electrocatalyst layer may be applied to both faces of the ion-conducting membrane to form a catalyst coated ion-conducting membrane. Subsequently, gas diffusion layers are applied to both faces of the catalyst coated ion-conducting membrane. Finally, an MEA can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of MEAs are required to provide enough power for most applications, so multiple MEAs are assembled to make up a fuel cell stack. Field flow plates are used to separate the MEAs. The plates perform several functions: supplying the reactants to the MEAs, removing products, providing electrical connections and providing physical support.

High electrochemical potentials can occur in a number of real-life operational situations and in certain circumstances can cause damage to the catalyst layer/electrode structure. Further description of a number of situations where high electrochemical potentials are seen are described below:

### (a) Cell Reversal

Electrochemical cells occasionally are subjected to a voltage reversal condition, which is a situation where the cell is forced to the opposite polarity. Fuel cells in series are potentially subject to these unwanted voltage reversals, such as when one of the cells is forced to the opposite polarity by the other cells in the series. In fuel cell stacks, this can occur when a cell is unable to produce, from the fuel cell reactions, the current being forced through it by the rest of the cells. Group of cells within a stack can also undergo voltage reversal and even entire stacks can be driven into voltage reversal by other stacks in an array. Aside from the loss of power associated with one or more cells going into voltage reversal, this situation poses reliability concerns. Undesirable electrochemical reactions may occur, which may detrimentally affect fuel cell components. Component degradation reduces the reliability and performance of the fuel cell, and in turn, its associated stack and array.

A number of approaches have been utilised to address the problem of voltage reversal, for example employing diodes capable of carrying the current across each individual fuel cell or monitoring the voltage of each individual cell and shutting down an affected cell if a low voltage is detected. However, given that stacks typically employ numerous fuel cells, such approaches can be quite complex and expensive to implement.

Alternatively, other conditions associated with voltage reversal may be monitored instead, and appropriate corrective action can be taken if reversal conditions are detected. For instance, a specially constructed sensor cell may be employed that is more sensitive than other fuel cells in the stack to certain conditions leading to voltage reversal (for example, fuel starvation of the stack). Thus, instead of monitoring every cell in a stack, only the sensor cell need be monitored and used to prevent widespread cell voltage reversal under such conditions. However, other conditions leading to voltage reversal may exist that a sensor cell cannot detect (for example, a defective individual cell in the stack). Another approach is to employ exhaust gas monitors that detect voltage reversal by detecting the presence of or abnormal amounts of species in an exhaust gas of a fuel cell stack that originate from reactions that occur during reversal. While exhaust gas monitors can detect a reversal condition occurring within any cell in a stack and they may suggest the cause of reversal, such monitors do not identify specific problem cells and they do not generally provide any warning of an impending voltage reversal.

Instead of, or in combination with the preceding, a passive approach may be preferred such that, in the event that reversal does occur, the fuel cells are either more tolerant to the reversal or are controlled in such a way that degradation of any critical cell components is reduced. A passive approach may be particularly preferred if the conditions leading to reversal are temporary. If the cells can be made more tolerant to voltage reversal, it may not be necessary to detect for reversal and/or shut down the fuel cell system during a temporary reversal period. Thus, one method that has been identified for increasing tolerance to cell reversal is to employ a catalyst that is more resistant to oxidative corrosion than conventional catalysts (see WO01/059859).

A second method that has been identified for increasing tolerance to cell reversal is to incorporate an additional or second catalyst composition at the anode for purposes of electrolysing water (see WO01/15247). During voltage reversal, electrochemical reactions may occur that result in the degradation of certain components in the affected fuel cell. Depending on the reason for the voltage reversal, there can be a significant rise in the absolute potential of the fuel cell anode to a higher potential than that of the cathode. This occurs, for instance, when there is an inadequate supply of fuel (i.e. fuel starvation) to the anode. In this situation the cathode reaction and thus the cathode potential remains unchanged as the oxygen reduction reaction (ORR):

½O₂ + 2H⁺ + 2e⁻ → H₂O

whereas the normal fuel cell reaction at the anode - the hydrogen oxidation reaction (HOR):

H₂ → 2H⁺ + 2e⁻

can no longer be sustained and other electrochemical reactions then take place at the anode to maintain the current. These reactions can typically be either water electrolysis - the oxygen evolution reaction (OER):

H₂O → ½ O₂ + 2H⁺ + 2e⁻

or carbon electrochemical oxidation:

½C + H₂O → ½CO₂ + 2H⁺ + 2e⁻

Both these reactions occur at a higher absolute potential than the oxygen reduction reaction at the cathode (hence the cell voltage reverses).

During such a reversal in a PEM fuel cell, water present at the anode enables the electrolysis reaction to proceed and the carbon support materials used to support the anode catalyst and other cell components enables the carbon oxidation reaction also to proceed. It is much more preferable to have water electrolysis occur rather than the carbon oxidation reaction. When water electrolysis reactions at the anode cannot consume the current forced through the cell, the rate of oxidation of the carbonaceous anode components increases, thereby tending to irreversibly degrade certain anode components at a greater rate. Thus, by incorporating a catalyst composition that promotes the electrolysis of water, more of the current forced through the cell may be consumed in the electrolysis of water than in the oxidation of anode components.

A reversal condition can also be experienced due to oxidant starvation on the cathode. However, this is much less detrimental to the cell, because the reaction likely to occur instead of the reduction of the oxidant is that the protons produced at the anode cross the electrolyte and combine with electrons directly at the cathode to produce hydrogen via the hydrogen evolution reaction (HER):

2H⁺ → 2e⁻ + H₂

In this reversal situation the anode reaction and thus the anode potential remain unchanged, but the absolute potential of the cathode drops to below that of the anode (hence the cell voltage reverses). These reactions do not involve potentials and reactions at which significant component degradation is caused.

### (b) Start-up Shut-down

For many fuel cells it is also not practical or economic to provide purging of hydrogen from the anode gas space with an inert gas such as nitrogen during shut down. This means that there may arise a mixed composition of hydrogen and air on the anode whilst air is present on the cathode. Similarly, when a cell is re-started after being idle for some time, air may have displaced hydrogen from the anode and as hydrogen is re-introduced to the anode, again a mixed air/hydrogen composition will exist whilst air is present at the cathode. Under these circumstances an internal cell can exist, as described by Tang et al (Journal of Power Sources 158 (2006) 1306-1312), which leads to high potentials on the cathode. The high potentials can cause carbon to oxidise according to the electrochemical carbon oxidation reaction indicated previously:

½C + H₂O → ½CO₂ + 2H⁺ + 2e⁻

and this is highly damaging to the structure of the catalyst layer where the catalyst layer contains carbon. If the cathode layer is able to support oxygen evolution by the water electrolysis reaction (OER) however, the high potentials can be used to drive water electrolysis rather than carbon corrosion.

### (c) Regenerative Fuel Cells

In regenerative fuel cells the electrodes are bi-functional and both anode and cathode must support two electrochemical reaction types at different times. When operating as a fuel cell the cathode must reduce oxygen (ORR) and the anode oxidise hydrogen (HOR); when operating as an electrolyser the cathode must evolve hydrogen (HER) and the anode evolve oxygen (OER). The catalyst layer of the present invention is well suited to be used as an anode in a regenerative fuel cell because it can carry out both the hydrogen and oxygen reactions effectively.

Electrocatalysts for the water electrolysis reaction are generally based on ruthenium oxide or ruthenium oxide mixed with at least one other metal oxide. However, despite their good activity for the oxygen evolution reaction (OER), the stability of such catalysts is poor under certain practical operational modes of the fuel cell, particularly those where highly oxidative potentials are applied. A particular problem with Ru-containing anode catalyst layers in an MEA, is that under start-stop operational modes of the fuel cell, high potentials can occur at the anode, resulting in Ru dissolution and movement to the cathode, where Ru is a poison for the ORR and reduces the effectiveness of Pt for this reaction.

WO03/032418 discloses an oxygen electrode for a unitized regenerative hydrogen-oxygen fuel cell. The oxygen electrode contains components electrocatalytically active for the evolution of oxygen from water and the reduction of oxygen to water.

WO2005/014884 discloses an electrode for electrochemical processes which is prepared from a titanium substrate by alkali pickling under controlled conditions. After the pickling step, the titanium substrate is preferably provided with a coating containing titanium dioxide.

It is therefore an object of the present invention to provide a catalyst layer comprising alternative water electrolysis catalysts, which have comparable activity to state of the art water electrolysis catalysts for the oxygen evolution reaction, but which demonstrates good performance and durability when incorporated in a MEA and operated under practical real-life fuel cell operating conditions.

Accordingly, the present disclosure provides a catalyst layer comprising:
(i) an electrocatalyst; and
(ii) a water electrolysis catalyst, wherein the water electrolysis catalyst comprises iridium or iridium oxide and one or more metals M or an
oxide thereof, wherein M is selected from the group consisting of transition metals and Sn, with the exception of ruthenium.

Suitably, M is selected from the group consisting of group IVB, VB and VIB metals and Sn; more suitably selected from the group consisting of Ti, Zr, Hf, Nb, Ta and Sn; preferably selected from the group consisting of Ti, Ta and Sn.

The iridium or oxide thereof and the one or more metals (M) or oxide thereof may either exist as mixed metals or oxides or as partly or wholly alloyed materials or as a combination of the two or more. The extent of any alloying can be shown by x- ray diffraction (XRD).

In the invention as claimed, the water electrolysis catalyst comprises iridium tantalum mixed oxide.

The atomic ratio of iridium to (total) metal M in the water electrolysis catalyst is from 20:80 to 99: 1, suitably 30:70 to 99:1 and preferably 60:40 to 99:1.

The electrocatalyst comprises a metal (the primary metal), which is suitably selected from
(i) the platinum group metals (platinum, palladium, rhodium, ruthenium, iridium and osmium), or
(ii) gold or silver, or
(iii) a base metal
or an oxide thereof.

The primary metal may be alloyed or mixed with one or more other precious metals, or base metals or an oxide of a precious metal or base metal. The metal, alloy or mixture of metals may be unsupported or supported on a suitable inert support. In one embodiment, if the electrocatalyst is supported, the support is non-carbonaceous. Examples of such a support include titania, niobia, tantala, tungsten carbide, hafnium oxide or tungsten oxide. Such oxides and carbides may also be doped with other metals to increase their electrical conductivity, for example niobium doped titania. In one preferred embodiment, the electrocatalyst is unsupported platinum.

The electrocatalyst and water electrolysis catalyst may be present in the catalyst either as separate layers or as mixed layer or as a combination of the two.

If present as separate layers, the layers are suitably arranged such that the water electrolysis layer is next to the membrane and therefore supplied with water diffusing back to the anode from the cathode. In a preferred embodiment, the electrocatalyst and the water electrolysis catalyst are present in the catalyst layer as a mixed layer.

Suitably, the ratio of the water electrolysis catalyst to electrocatalyst in the catalyst layer is from 10:1 to 1:10 with the electrocatalyst. The actual ratio will depend on whether the catalyst layer is on the anode or cathode. In the case of an anode catalyst layer, the ratio is suitably from 0.05:1 to 10:1; preferably, from 0.75:1 to 5:1. In the case of a cathode catalyst layer, the ratio is suitably from 1:1 to 1:10; preferably from 0.5:1 to 1:5.

Suitably, the loading of the primary metal of the electrocatalyst in the catalyst layer is less than 0.4mg/cm², and is preferably from 0.01mg/cm² to 0.35mg/cm², most preferably 0.02mg/cm² to 0.25mg/cm².

The catalyst layer may comprise additional components, such as an ionomer, suitably a proton conducting ionomer. Examples of suitable proton conducting ionomers will be known to those skilled in the art, but include perfluorosulphonic acid ionomers, such as Nafion® and ionomers made from hydrocarbon polymers.

The catalyst layer of the invention has utility in PEM fuel cells. Accordingly, a further aspect of the invention provides an electrode comprising a gas diffusion layer (GDL) and a catalyst layer according to the invention.

In one embodiment, the electrode is an anode, wherein the water electrolysis catalyst comprises iridium tantalum mixed oxide.

In a further embodiment, the electrode is a cathode wherein the water electrolysis catalyst comprises iridium tantalum mixed oxide.

The catalyst layer can be deposited onto a GDL using well known techniques, such as those disclosed in EP 0 731 520. The catalyst layer components may be formulated into an ink, comprising an aqueous and/or organic solvent, optional polymeric binders and optional proton-conducting polymer. The ink may be deposited onto an electronically conducting GDL using techniques such as spraying, printing and doctor blade methods. Typical GDLs are fabricated from substrates based on carbon paper (e.g. Toray® paper available from Toray Industries, Japan or U105 or U107 paper available from Mitsubishi Rayon, Japan), woven carbon cloths (e.g. the MK series of carbon cloths available from Mitsubishi Chemicals, Japan) or non-woven carbon fibre webs (e.g. AvCarb series available from Ballard Power Systems Inc, Canada; H2315 series available from Freudenberg FCCT KG, Germany; or Sigracet® series available from SGL Technologies GmbH, Germany). The carbon paper, cloth or web is typically modified with a particulate material either embedded within the layer or coated onto the planar faces, or a combination of both to produce the final GDL. The particulate material is typically a mixture of carbon black and a polymer such as polytetrafluoroethylene (PTFE). Suitably the GDLs are between 100 and 400µm thick. Preferably there is a layer of particulate material such as carbon black and PTFE on the face of the GDL that contacts the catalyst layer.

In PEM fuel cells, the electrolyte is a proton conducting membrane. The catalyst layer of the invention may be deposited onto one or both faces of the proton conducting membrane to form a catalysed membrane. In a further aspect the present invention provides a catalysed membrane comprising a proton conducting membrane and a catalyst layer of the invention. The catalyst layer can be deposited onto the membrane using well-known techniques. The catalyst layer components may be formulated into an ink and deposited onto the membrane either directly or indirectly via a transfer substrate.

The membrane may be any membrane suitable for use in a PEM fuel cell, for example the membrane may be based on a perfluorinated sulphonic acid material such as Nafion® (DuPont), Flemion® (Asahi Glass) and Aciplex® (Asahi Kasei); these membranes may be used unmodified, or may be modified to improve the high temperature performance, for example by incorporating an additive. Alternatively, the membrane may be based on a sulphonated hydrocarbon membrane such as those available from Polyfuel, JSR Corporation, FuMA-Tech GmbH and others. The membrane may be a composite membrane, containing the proton-conducting material and other materials that confer properties such as mechanical strength, such as expanded PTFE or a non-woven PTFE fibre network. Alternatively, the membrane may be based on polybenzimidazole doped with phosphoric acid and include membranes from developers such as BASF Fuel Cell GmbH, for example the Celtec®-P membrane which will operate in the range 120°C to 180°C and other newer developmental membrane such as the Celtec®-V membrane.

In a further embodiment of the invention, the substrate onto which the catalyst of the invention is applied is a transfer substrate. Accordingly, a further aspect of the present invention provides a catalysed transfer substrate comprising a catalyst layer of the invention. The transfer substrate may be any suitable transfer substrate known to those skilled in the art but is preferably a polymeric material such as polytetrafluoroethylene (PTFE), polyimide, polyvinylidene difluoride (PVDF), or polypropylene (especially biaxially-oriented polypropylene, BOPP) or a polymer-coated paper such as polyurethane coated paper. The transfer substrate could also be a silicone release paper or a metal foil such as aluminium foil. The catalyst layer of the invention may then be transferred to a GDL or membrane by techniques known to those skilled in the art.

A yet further aspect of the invention provides a membrane electrode assembly comprising a catalyst layer, electrode or catalysed membrane according to the invention. The MEA may be made up in a number of ways including, but not limited to:
(i) a proton conducting membrane may be sandwiched between two electrodes (one anode and one cathode), at least one of which is an electrode according to the present invention;
(ii) a catalysed membrane coated on one side only by a catalyst layer may be sandwiched between (i) a gas diffusion layer and an electrode, the gas diffusion layer contacting the side of the membrane coated with the catalyst layer, or (ii) two electrodes, and wherein at least one of the catalyst layer and the electrode(s) is according to the present invention;
(iii) a catalysed membrane coated on both sides with a catalyst layer may be sandwiched between (i) two gas diffusion layers, (ii) a gas diffusion layer and an electrode or (iii) two electrodes, and wherein at least one of the catalyst layer and the electrode(s) is according to the present invention.

The MEA may further comprise components that seal and/or reinforce the edge regions of the MEA for example as described in WO2005/020356. The MEA is assembled by conventional methods known to those skilled in the art.

Electrochemical devices in which the catalyst layer, electrode, catalysed membrane and MEA of the invention may be used include fuel cells, in particular proton exchange membrane (PEM) fuel cells. The PEM fuel cell could be operating on hydrogen or a hydrogen-rich fuel at the anode or could be fuelled with a hydrocarbon fuel such as methanol. The catalyst layer, electrode, catalysed membrane and MEA of the invention may also be used in fuel cells in which the membranes use charge carriers other than protons, for example OH⁻ conducting membranes such as those available from Solvay Solexis S.p.A., FuMA-Tech GmbH. The catalyst layer and electrode of the invention may also be used in other low temperature fuel cells that employ liquid ion conducting electrolytes, such as aqueous acids and alkaline solutions or concentrated phosphoric acid. Other electrochemical devices in which the catalyst layer, electrode, catalysed membrane and MEA of the invention may be used are as the anode electrode of regenerative fuel cells where the hydrogen oxidation and oxygen evolution reactions are both performed, and as the anode of an electrolyser where oxygen evolution is performed by the water electrolysis catalyst and contaminant hydrogen is recombined with oxygen by the electrocatalyst.

Accordingly, a further aspect of the invention provides a fuel cell, preferably a proton exchange membrane fuel cell, comprising a catalyst layer, an electrode, a catalysed membrane or an MEA of the invention.

The invention will now be further described by way of example only.

### Preparation of water electrolysis catalysts

### IrTa mixed oxide catalyst

IrCl₃ (76.28g, 0.21 mol Ir) was suspended in water (500ml) and stirred overnight. TaCl₅ (32.24g, 0.090 mol Ta) was added to concentrated hydrochloric acid (200ml) with stirring to give a slightly milky solution. The Ta solution was stirred into the IrCl₃ solution and kept until ready to use. The solution was spray dried and calcined in air to yield a 70at%Ir 30at%Ta mixed oxide catalyst.

### IrSn mixed oxide catalyst

An IrSn mixed oxide water electrolysis catalyst was prepared in an analogous manner to the IrTa mixed oxide water electrolysis catalyst described above. A 70at%Ir 30at%Sn mixed oxide catalyst was obtained

### IrTi mixed oxide catalyst

High surface area TiO₂ (3.0 g) was stirred in water (500 ml) and IrCl₃ (92.2 g) added. The suspension was warmed to 75°C and 1M NaOH was added dropwise until the pH remained stable at 7. The suspension was cooled, and the catalyst product was collected by filtration and washed with water. The material was calcined in air to yield a 87at%Ir 13at%Ti mixed oxide catalyst.

Anodes catalyst layers were made as listed in Table 1, by screen printing the appropriate ink onto a decal transfer substrate to give the required loading. The catalyst inks were made according to the techniques described in EP 0 731 520. Where the ink contained both electrocatalyst and water electrolysis catalyst, an ink containing the electrocatalyst was first made, and the water electrolysis catalyst was subsequently added.

**Table 1**

| Example No. | Electrocatalyst | Water Electrolysis Catalyst | Ratio of water electrolysis catalyst: electrocatalyst |
|---|---|---|---|
| Comparative 1 | Pt/carbon (0.225mg Pt cm⁻²) | | |
| Comparative 2 | Pt/carbon (0.2mg Pt cm⁻²) | RuO₂/IrO₂ (90:10 at% Ru:Ir, 0.16 mgcm⁻²) | 1 : 1.25 |
| Comparative 3 | Pt black (0.36mg Pt cm⁻²) | IrO₂ (0.29 mgcm⁻²) | 1: 1.25 |
| Comparative 4 | Pt/heat-treated carbon (0.384mg Pt cm⁻²) | | |
| Example 1 | Pt black (0.33mg Pt cm⁻²) | IrO₂/Ta₂O₅ (70:30 at% Ir:Ta, 0.26 mgcm⁻²) | 1 : 1.25 |
| Example 2 (comparative) | Pt black (0.38mg Pt cm⁻²) | IrSn (70:30 at% Ir:Sn, 0.30 mgcm⁻²) | 1 : 1.25 |
| Example 3 (comparative) | Pt black (0.38mg Pt cm⁻²) | IrO₂/TiO₂ (87:13 at%, 0.30 mgcm⁻²) | 1 : 1.25 |
| Example 4 | Pt/heat-treated carbon (0.44 mg Pt cm⁻²) | IrO₂/Ta₂O₅ (70:30 at% Ir:Ta, at 0.044 mg cm⁻² | 1:10 |

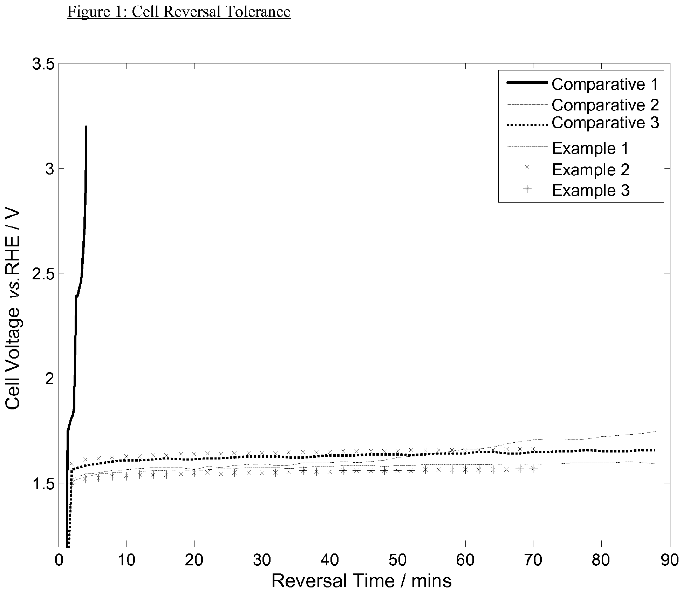

An MEA was produced by combining the anode with a conventional, carbon supported cathode catalyst layer of ∼ 0.4 mg Pt cm⁻² and a perfluorinated sulfonic acid membrane by the well known decal transfer method to produce a catalyst coated membrane membrane (CCM). The CCM was assembled between two sheets of waterproofed carbon paper coated with a hydrophobic microporous layer to form the complete membrane electrode assembly. This was then tested in a 1 cm² active area fuel cell under simulated starvation conditions at 80 °C. The cell was first operated with humidified hydrogen and air flowing over the anode and cathode respectively. A current of 500 mA cm⁻² was applied for 5 minutes to allow the MEA to reach a constant condition. The current was then dropped to 200 mA cm⁻² and the hydrogen supply switched to nitrogen. The current drawn from the cell was then kept constant until either 90 minutes passed or the cell voltage dropped below -2.5 V. The results are shown in Figure 1. The results indicate that the catalyst layers of the invention (Examples 1, 2 and 3) perform better than Comparative Example 1 and comparably to Comparative Example 2 and 3.

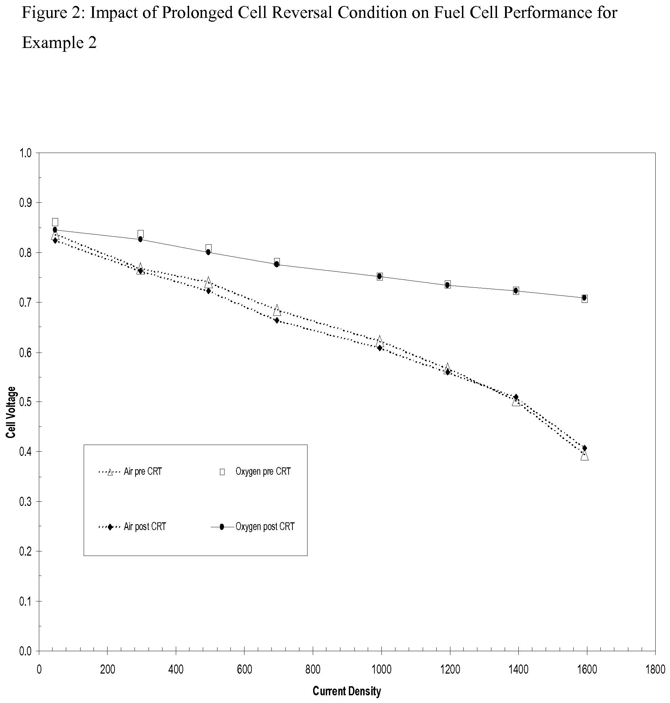

A similar MEA was prepared from Example 1 and then tested in a 242 cm² active area fuel cell under simulated starvation conditions at 80 °C. The cell was first operated with humidified hydrogen and air flowing over the anode and cathode respectively. A current of 500 mA cm⁻² was applied for 5 minutes to allow the MEA to reach a constant condition. The current was then dropped to 200 mA cm⁻² and the hydrogen supply switched to nitrogen. The current drawn from the cell was then kept constant until either 90 minutes passed or the cell voltage dropped below -2.5 V. Polarisation curves were measured using air, 21% oxygen in helium (Helox) and pure oxygen both before and after the reversal testing to see if any damage had occurred. The results are shown in Figure 2. The performance of the MEA after 90 minutes of reversal matches the initial performance very closely across all conditions indicating the stability of the electrode.

MEAs were also prepared with catalyst layers according to Comparative 4 and Example 4 on the cathode and a standard catalyst layer on the anode. The resistance of the MEA to simulated start-stop conditions was tested by mounting the MEA in a single cell with an active area of 242 cm² and, after conditioning, subjecting the MEA to the following sequence: (i) holding the current at a relatively high current density for 15 minutes with hydrogen on the anode and air on the cathode; (ii) reducing the load and holding for 30 seconds; (iii) stopping the supply of hydrogen to the anode, removing the load and purging the anode and cathode with air; (iv) reintroducing the hydrogen to the anode and holding at a very low current density for 10 seconds; (v) applying a similar load to that in step (ii) and maintaining for 30 seconds; (vi) increasing the load to a medium current density and holding for 5 minutes.

A single cycle consists of steps (ii) to (vi); step (i) was performed initially and then after every ten cycles. The performance loss during step (vi) was monitored as a function of the number of cycles.

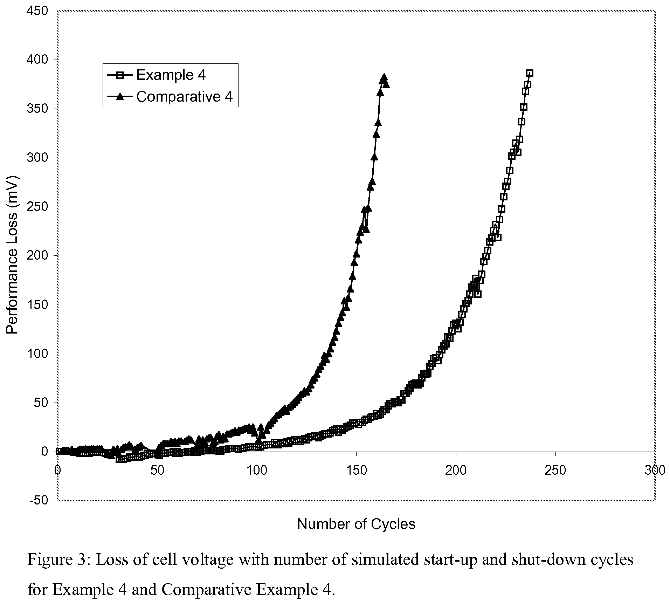

The loss of cell voltage for Comparative Example 4 and Example 4 are shown in Figure 3. It takes many more cycles for Example 4 to reach the same loss of cell voltage as Comparative Example 4 because of the protective action of the IrTa water electrolysis catalyst.

## Claims

1. An electrode comprising a gas diffusion layer and a catalyst layer, the catalyst layer comprising:
(i) an electrocatalyst, and
(ii) a water electrolysis catalyst, wherein the water electrolysis catalyst comprises an iridium tantalum mixed oxide.

2. An electrode according to claim 1, wherein the water electrolysis catalyst is unsupported.

3. An electrode according to any preceding claim, wherein the electrocatalyst comprises a metal, the primary metal, which is suitably selected from
(a) the platinum group metals platinum, palladium, rhodium, ruthenium, iridium and osmium, or
(b) gold or silver, or
(c) a base metal
or an oxide thereof.

4. An electrode according to any one of claims 1 to 3, wherein the electrocatalyst is unsupported.

5. An electrode according to claim 4, wherein the electrocatalyst is unsupported platinum.

6. A catalysed membrane comprising a solid polymeric membrane and a catalyst layer, the catalyst layer comprising:
(i) an electrocatalyst, and
(ii) a water electrolysis catalyst, wherein the water electrolysis catalyst comprises an iridium tantalum mixed oxide.

7. A catalysed transfer substrate comprising a transfer substrate and a catalyst layer, the catalyst layer comprising:
(i) an electrocatalyst, and
a water electrolysis catalyst, wherein the water electrolysis catalyst comprises an iridium tantalum mixed oxide.

8. A membrane electrode assembly comprising an electrode as claimed in any one of claims 1 to 5 or a catalysed membrane as claimed in claim 6.

9. A fuel cell comprising an electrode as claimed in any one of claims 1 to 5 or a catalysed membrane as claimed in claim 6.

## Patentansprüche

1. Elektrode, die eine Gasdiffusionsschicht und eine Katalysatorschicht umfasst, wobei die Katalysatorschicht Folgendes umfasst:
(i) einen Elektrokatalysator und
(ii) einen Wasserelektrolysekatalysator, wobei der Wasserelektrolysekatalysator ein Iridium-Tantal-Mischoxid umfasst.

2. Elektrode nach Anspruch 1, wobei der Wasserelektrolysekatalysator ungeträgert ist.

3. Elektrode nach einem vorhergehenden Anspruch, wobei der Elektrokatalysator ein Metall, das primäre Metall, das auf geeignete Weise aus
(a) den Metallen der Platingruppe Platin, Palladium, Rhodium, Ruthenium, Iridium und Osmium, oder
(b) Gold oder Silber, oder
(c) einem Grundmetall
ausgewählt ist, oder ein Oxid davon umfasst.

4. Elektrode nach einem der Ansprüche 1 bis 3, wobei der Elektrokatalysator ungeträgert ist.

5. Elektrode nach Anspruch 4, wobei der Elektrokatalysator ungeträgertes Platin ist.

6. Katalysierte Membran, die eine feste polymere Membran und eine Katalysatorschicht umfasst, wobei die Katalysatorschicht Folgendes umfasst:
(i) einen Elektrokatalysator und
(ii) einen Wasserelektrolysekatalysator, wobei der Wasserelektrolysekatalysator ein Iridium-Tantal-Mischoxid umfasst.

7. Katalysiertes Transfersubstrat, das ein Transfersubstrat und eine Katalysatorschicht umfasst, wobei die Katalysatorschicht Folgendes umfasst:
(i) einen Elektrokatalysator und
einen Wasserelektrolysekatalysator, wobei der Wasserelektrolysekatalysator ein Iridium-Tantal-Mischoxid umfasst.

8. Membran-Elektroden-Einheit, die eine Elektrode nach einem der Ansprüche 1 bis 5 oder eine katalysierte Membran nach Anspruch 6 umfasst.

9. Brennstoffzelle, die eine Elektrode nach einem der Ansprüche 1 bis 5 oder eine katalysierte Membran nach Anspruch 6 umfasst.

## Revendications

1. Électrode comprenant une couche de diffusion de gaz et une couche catalytique, la couche catalytique comprenant :
(i) un électrocatalyseur et
(ii) un catalyseur d'électrolyse de l'eau, le catalyseur d'électrolyse de l'eau comprenant un oxyde mixte d'iridium et de tantale.

2. Électrode selon la revendication 1, le catalyseur d'électrolyse de l'eau étant non supporté.

3. Électrode selon l'une quelconque revendication précédente, l'électrocatalyseur comprenant un métal, le métal primaire, qui est de manière appropriée choisi parmi
(a) les métaux du groupe du platine qui sont le platine, le palladium, le rhodium, le ruthénium, l'iridium et l'osmium ou
(b) de l'or ou de l'argent ou
(c) un métal basique
ou un oxyde correspondant.

4. Électrode selon l'une quelconque des revendications 1 à 3, l'électrocatalyseur étant non supporté.

5. Électrode selon la revendication 4, l'électrocatalyseur étant du platine non supporté.

6. Membrane catalysée comprenant une membrane polymère solide et une couche catalytique, la couche catalytique comprenant :
(i) un électrocatalyseur et
(ii) un catalyseur d'électrolyse de l'eau, le catalyseur d'électrolyse de l'eau comprenant un oxyde mixte d'iridium et de tantale.

7. Substrat de transfert catalysé comprenant un substrat de transfert et une couche catalytique, la couche catalytique comprenant :
(i) un électrocatalyseur et
un catalyseur d'électrolyse de l'eau, le catalyseur d'électrolyse de l'eau comprenant un oxyde mixte d'iridium et de tantale.

8. Assemblage d'électrode à membrane comprenant une électrode selon l'une quelconque des revendications 1 à 5 ou une membrane catalysée selon la revendication 6.

9. Pile à combustible comprenant une électrode selon l'une quelconque des revendications 1 à 5 ou une membrane catalysée selon la revendication 6.
